Europäisches Patentamt

European Patent Office

Office européen des brevets

(11) Publication number: 0 236 922
A2

# (12) EUROPEAN PATENT APPLICATION

(21) Application number: 87103037.5

(51) Int. Cl.4: G01K 7/04

(22) Date of filing: 04.03.87

(30) Priority: 10.03.86 US 838110

(43) Date of publication of application:
16.09.87 Bulletin 87/38

(84) Designated Contracting States:
AT BE CH DE FR GB IT LI SE

(71) Applicant: GENERAL ELECTRIC COMPANY
1 River Road
Schenectady New York 12305(US)

(72) Inventor: St. Pierre, Philippe D.
235 Medick Way
Worthington Ohio 43085(US)

(74) Representative: Catherine, Alain et al
General Electric - Deutschland Munich
Patent Operation Frauenstrasse 32
D-8000 München 5(DE)

(54) Apparatus for monitoring temperatures of implements during brazing.

(57) Disclosed is an apparatus for monitoring the temperature of an implement being brazed to a workpiece. The preferred implement is a polycrystalline diamond composite compact which is brazed to a drill bit or other workpiece. The apparatus comprises a temperature probe comprising a stiff support rod of predetermined length with extent extending from a base porltion to a tip. Thermal insulaltion means is disposed within the support rod substantially along the lengthwise extent and has a first passageway therethrough. An insulating handle is connected in supporting relationship with the rod and has a second passageway therethrough which communicates with the first passageway. A heat shield is disposed about the handle in the vicinity of its connection with the base portion of the rod and has electrical connector means disposed at the end of the handle opposite the base portion connection. Thermocouple means for generating signals correlative with temperature is disposed at the rod tip and lead means within the first and second passageways electrically couples the electrical connector with the thermocouple means. An alarm unit energizable from a source to have an enabled state is electrically coupled with the temperature probe. The alarm unit has cuing means energized to provide a first perceptible output in the presence of said energized state and a second perceptible output in the absence of the electrical coupling of the probe to the unit. Circuit means are provided responsive to said signals from said thermocouple. Said circuit means has first and second outputs corresponding with said signals representing two predetermined temperatures. Said unit further comprises first audible alarm means responsive to said first output and second audible alarm means responsive to said second output. These two alarm means are audibly distinguishable. Also disclosed is a method for monitoring the temperature of an implement comprising a composite compact having an abrasive particle layer bonded to a support being brazed to a substrate by a brazing filler metal disposed therebetween. Such method comprises using the apparatus disclosed herein.

FIG. 1

## APPARATUS FOR MONITORING TEMPERATURES OF IMPLEMENTS DURING BRAZING

### Technical Field

This invention relates to implements incorporating abrasive particle compacts and more particularly to an apparatus useful in monitoring the temperature of the compacts during brazing of the implements to workpieces. The abrasive particle compact implements have special utility in drill bits for oil and gas exploration and in mining applications.

### Background Art

An abrasive particle compact is a polycrystalline mass of abrasive particles such as diamond and/or cubic boron nitride bonded together to form an integral, tough, high-strength mass. Such components can be bonded together in a particle-to-particle self-bonded relationship, by means of a bonding medium disposed between the particles, or by combinations thereof. For examples, see U.S. Pats. Nos. 3,136,615; 3,141,746; and 3,233,988. A sport abrasive particle compact herein termed a composite compact, is an abrasive particle compact which is bonded to a substrate material, such as cemented tungsten carbide. Compacts of this type are described, for example, in U.S. Pats. Nos. 3,743,489, 3,745,623, and 3,767,371. The bond to the support can be formed either during or subsequent to the formation of the abrasive particle compact.

Composite compacts have found special utility as cutting elements in drill bits. These compacts can be attached directly to the drill crown of drill bits by a variety of techniques. U.S. Pat. No. 4,156,329 proposes to furnace braze a pre-tinned metal-coated compact to recesses formed in the crown. U.S. Pat. No. 4,186,628 proposes to attach the compact cutters to the crown by placing the compacts in a mold, filling the crown portion of the mold with powder, and running a low temperature infiltration braze into the mold to form the crown containing the compacts embedded therein. U.S. Pat. No. 4,098,362 proposes drill bits in the manner of the latter proposal wherein the cutters are placed at a rake angle of between -10° and -25°.

Alternatively, composite compacts can be affixed to an elongated stud or substrate which stud then is attached to the drill crown. The stud provides greater attachment area to the drill crown. It also provides more support for the abrasive particle compact thereby increasing its impact resistance. Composite compacts have been attached to studs in both a right cylinder configuration as depicted in U.S. Pat Np. 4,200,159, and in an angled configuration, as shown, for example, in U.S. Pat. No. 4,265,324.

Although the benefits of attaching a composite compact to a stud or substrate are apparent, problems have been encountered in achieving the actual attachment. In particular, it has been noted that composite compacts in which the abrasive portion is self-bonded and metal infiltrated such as described in U.S. Pat. No. 3,745,623 and available commercially under the trademarks Compax and Syndite are susceptible to thermal damage if exposed to temperatures in excess of about 700°C. - (As used herein self-bonded means that the abrasive particles are directly bonded one to another.) This damage is thought to result from a differential in the thermal expansion rate of the abrasive and metal phases. At elevated temperatures there is also a risk of degradation to the particles themselves as by graphitization or oxidation. This type of degradation is thought to be of concern for all types of abrasive particle compacts. Accordingly, braze alloys with liquidus temperatures of less than 700°C were utilized initially for attachment of composite compacts to studs or substrates. Unfortunately, such low temperature braze alloys found only limited applicability in the marketplace due to their characteristically low bond strengths.

A major breakthrough in the attachment of composite compacts to substrates was made by Knemeyer in U.S. Pats. Nos. 4,225,322 and 4,319,707. The Knemeyer process permits the use of high temperature braze alloys for attaching a composite compact to a substate. Such high temperature braze alloys, in turn, provide significantly greater bond strengths. While the Knemeyer method and apparatus permit the use of high temperature braze alloys, difficulty has arisen in the selection of a suitable one. For example, Anaconda 773 filler metal, initially proposed in the Knemeyer patents, is now thought to be undesirably reactive with the carbide pieces being joined. Preferred brazing alloys include the gold-based alloy disclosed in commonly-assigned U.S. Pat. No. 4,527,998 and the palladium-based braze alloy disclosed in commonly-assigned application Serial No. 752,419, filed July 5, 1985.

Complicating the braze operation is the necessary exposure of the polycrystalline mass of the composite compact to the elevated temperatures necessary for accomplishing the braze operation. During such brazing or welding operations, is difficult at best for the brazer or a helper to take temperature measurements of the polycrystalline mass, even though such temperature measurements may be critical to the success of the brazing operation. Two factors contributing to this problem include the necessity for the brazer to wear dark goggles for protection against the bright light emitted by the flame and the object being heated, and the need of the brazer to devote an undivided attention to the workpiece during the brazing operation. It is easy to overheat the composite compact since the flame is much hotter than the temperature actually needed to melt and flow the braze filler material.

## Broad Statement of the Invention

The present invention is directed to such brazing operation and particularly addresses the need for closely monitoring the actual temperature of the polycrystalline mass during the brazing or welding operation so that a minimum temperature is reached whereat the braze diller material flows and properly brazes the implement to the workpiece but does not exceed a threshold temperature whereat thermal damage to the polycrystalline mass mass might occur. The apparatus comprises a temperature probe comprising a stiff support rod of predetermined length with extent extending from a base portion to a tip. Thermal insulation means is disposed within the support rod substantially along the lengthwise extent and has a first passageway therethrough. An insulating handle is connected in supporting relationship with the rod and has a second passageway therethrough which communicates with the first passageway. A heat shield is disposed about the handle in the vicinity of its connection with the base protion of the rod and has electrical connector means disposed at the end of the handle opposite the base portion connection. Thermocouple means for generating signals correlative with temperature is disposed at the rod tip and lead means within the first and second passageways electrically couples the electrical connector with the thermocouple means. An alarm unit energizable from a source to have an enabled state is electrically coupled with the temperature probe. The alarm unit has cuing means energized to provide a first perceptible output in the presence of said energized state and of the electrical coupling of the probe to the unit. Circuit means are provided responsive to said signals from said thermocouple. Said circuit means has first and second outputs corresponding with said signals representing two predetermined temperatures. Said unit further comprises first audible alarm means responsive to said first output and second audible alarm means responsive to said second output. These two alarm means are audibly distinguishable. Also disclosed is a method for monitoring the temperature of an implement comprising a composite compact having an abrasive particle layer bonded to a support being brazed to a substrate by a brazing filler metal disposed therebetween. Such method comprises using the apparatus disclosed herein.

Advantages of the present invention include a temperature probe which not only monitors the temperature of the implement (e.g. polycrystalline mass) being brazed to a workpiece, but also provides tactile force for retaining the implement in proper position with the workpiece for the brazing operation to be accomplished. Another advantage is an apparatus which provides cuing as to whether the unit is on, e.g. electricity being supplied to the unit, and as to whether a proper electrical connection with the probe is present. A further advantage comprises dual audible alarms which indicate that the minimum braze temperature has been reached by one audible emission while reserving a second and distinguishable audible emission indicative of the upper temperature limit being reached during the brazing operation. This minimizes possible thermal damage to the implement arising by virtue of the brazing operation. These and other advantages will be readily apparent to those skilled in the art based upon the disclosure contained herein.

## Brief Description of the Drawings

Fig. 1 is a perspective view of the temperature probe and alarm unit in their operating configuration;

Fig. 2 is an elevational view of the rear side of the alarm unit of Fig. 1;

Fig. 3 is a cross-section of the probe of Fig. 1 taken along line 3-3;

Fig. 4 is a cross-section of the temperature probe of Fig. 3 taken along line 4-4; and

Fig. 5 is a cross-section of the probe of Fig. 3 taken along line 5-5.

The drawings will be described in detail below.

## Detailed Description of the Invention

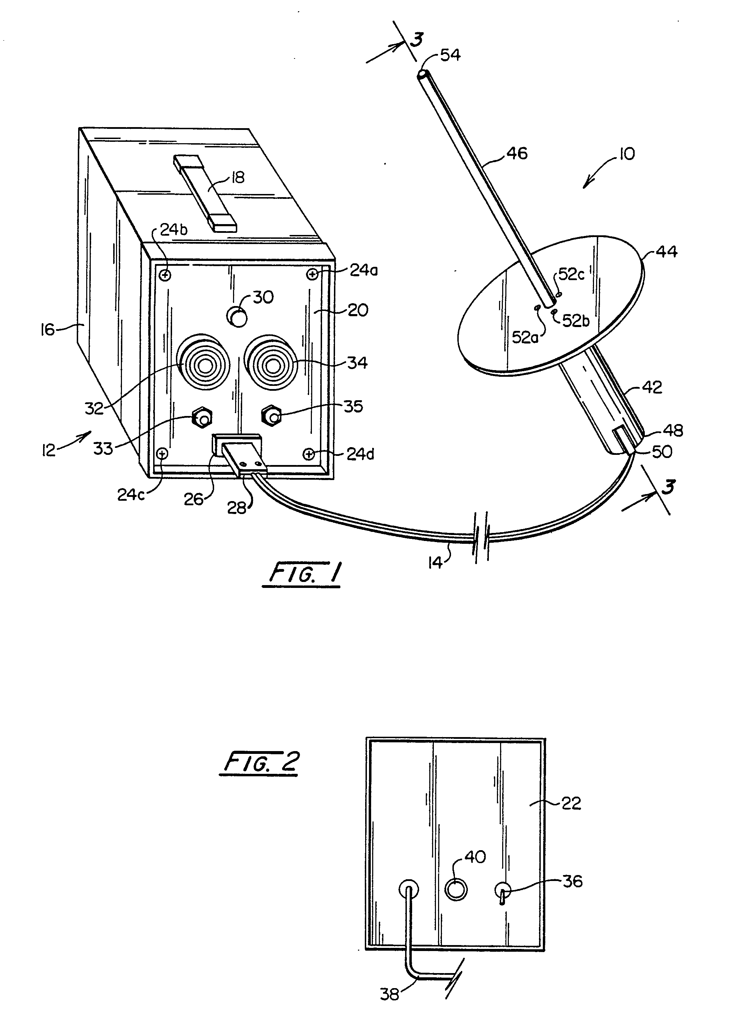

Fig. 1 shows the inventive apparatus for monitoring the temperature of an implement being brazed to a workpiece and which comprises temperature probe 10 and alarm unit 12 being electrically coupled through line 14. With reference to alarm unit 12, it will be observed that alarm unit 12 is comprised of container 16 which is shown to be rectangular, though other shapes of course may be provided. The top surface of container 16 bears handle 18 which is used because alarm unit 12 is portable. Alarm unit 12 further has a front or face plate 20 and rear plate 22 (Fig. 2). Face plate 20 is affixed to container 16 via screws 24a-24d. Face plate 20 further bears electrical connector 26 for receiving plug 28 which is disposed about the one end of line 14. Alarm unit 12 further contains light 30 disposed at face plate 20. Light 30 provides visual cuing that alarm unit 12 is energized (being supplied with electricity from a source) and functioning properly. It will be appreciated that audible cuing means can be provided in complement or in the alternative to light 30 as is necessary, desirable or convenient. Regardless of the mode of operation of such cuing means, an indicia correlative to proper functioning of the apparatus is provided to the brazer so that he can devote his full attention to the brazing operation.

Alarm unit 12 further contains alarms 32 and 34 which provide audible alarm sounds responsive to temperatures being sensed by temperature probe 10. That is, circuit means in alarm unit 12 are preset with a first output corresponding with a thermocouple signal representing predetermined minimum temperature setting whereat proper brazing can proceed. Such temperature is determined based upon the particular braze filler metal being utilized. As soon as the signal from temperature probe 10 activates the first circuit output, alarm means 32 emits an audible sound, preferably a continuous sound, to let the brazer know that the brazing operation can proceed. Knobs 33 and 35 control the loudness of alarms 32 and 34, respectively. If temperature probe 10 becomes damaged or unplugged, alarm 34 will sound also, thus providing audible cuing means to the brazer that the apparatus is not in proper condition for being utilized.

The circuit means in alarm unit 12 additionally is preset with a second output corresponding with a thermocouple signal representing a second, predetermined, higher temperature setting which, when indicated by temperature probe 10, causes alarm means 34 to emit a second, e.g. intermittent, sound to let the brazer know that the upper threshold temperature limit is being approached. For example, this upper temperature limit may be set at the temperature whereat thermal damage to polycrystalline diamond can occur. The brazer now can focus full and undivided attention to the brazing operation without being concerned about monitoring meters or other temperature measuring devices which are occasionally used today. It will be appreciated that visible indicia can be provided alternatively or in addition to the audible alarm means for visually, as well as audibly, indicating the two temperature limits which have been preset into alarm unit 12. An exemplary alarm unit which contains the appropriate circuit and alarm means, and which can be adapted for use in accordance with the precepts of the present invention include Models AP120 through AP1224 thermocouple input dual limit alarms instruments as manufactured by Action Instruments of San Diego, California.

Alarm variations can be implemented readily. For example, the upper temperature setting may be indicated by ever increasing loudness, pitch, frequency, etc. of the emitter as the probe sensed temperature nears the upper setting. In this manner, the alarm may initially sound at 20°C (or some other convenient value) below the upper temperature setting and then increase in frequency, pitch, etc. as the sensed probe temperature nears the upper temperature setting. Supplemented with a stroboscopic light source, optionally, provides a unique and reliable manner of alerting the brazer.

With reference to Fig. 2, rear plate 22 bears on/off switch 36 and electrical cord 38 which is designed for use with conventional a.c. power. It will be appreciated that alarm unit 12 suitably can be modified to operate on d.c. voltage for true portability. Finally, fuse and fuse holder assembly 40 are disposed for easy access at rear plate 22.

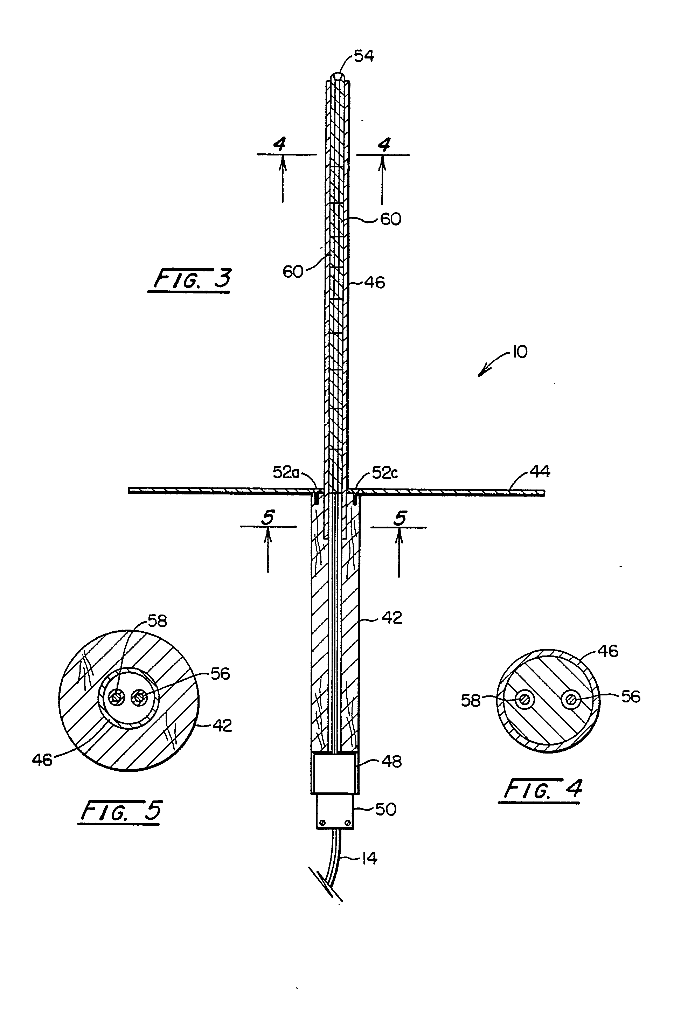

Referring to temperature probe 10 as depicted at Figs. 1 and 3, probe 10 has been constructed for providing a dual function. One function is the ability to sense temperature by use of a thermocouple wherein the sensed temperature is used via alarm unit 12 for monitoring the temperature of an implement (e.g. polycrystalline diamond mass) being brazed. The second function involves the use of probe 10 to provide tactile, physical force for holding an implement in place for it to be brazed to a workpiece. For example, a composite compact mounted on a carbide stud could be physically pressed and held into position for brazing onto a tool bit utilizing probe 10.

Probe 10 comprises insulating handle 42 having a passageway therethrough which preferably is composed of wood, though ceramic or other insulating material may be appropriate; heat shield 44 which preferably is composed of stainless steel, though ceramic or other material may be appropriate; and stiff support rod 46, which preferably is manufactured from stainless steel for durability and ruggedness, though other materials of construction are feasible. The lower end of handle 42 retains electrical connector or socket depicted at 48 for receiving plug 50 which is disposed at one end of line 14 for providing electrical connection between probe 10 and alarm unit 12. Heat shield 44 is affixed to handle 42 via screws 52a-52c, though other modes of attachment can be envisioned. Rod 46 may be bent in one or more locations for use in hard to access locations.

At the tip of support rod 46 is disposed thermocouple 54. Thermocouple 54 is manufactured to be as small as possible consistent with providing sufficient strength to withstand normal day-to-day usage. The junction of thermocouple 54 being small also maximizes temperature responsiveness of the probe. It should be understood that successful use of probe 10 depends on good thermal contact being established between thermocouple 54 and the implement being brazed (e.g. a polycrystalline diamond mass). Since the brazer likely will hold probe 10 at various angles depending upon the location of the implement being brazed, good thermal contact may be difficult to accomplish. This is especially true since contact may be broken on occasion during the brazing operation. Thus, a unique solution to this problem, as an aspect of the present invention, comprises the use of a glassy material, e.g. a flux, which is viscous enough to form a microbath or pool at the thermocouple/implement interface in order to provide enhanced thermal contact therebetween. Suitable fluxes or thermal contact enhancing agents should be inert with respect to the thermocouple and with respect to the implement in contact therewith. This heat transfer medium additionally should melt at a low temperature, desirably below the minimum braze temperature and should not decompose during the brazing operation even at the upper end of the brazing temperature range. Since implements likely are to be in a sideways or even upside-down condition on occasion, viscosity is important so that the flux agent sufficiently wets the thermal junction surfaces for establishing good thermal contact and does not run or drip off of such surfaces. Suitable flux agents or glassy materials which meet these diverse requirements include, for example, boric oxide, anhydrous boric oxide, mixtures of chlorides and/or fluorides of alkali metals, and the like and mixtures thereof. This use of flux agents for enhancing thermal contact, rather than their use in the conventional cleaning sense, contributes to the practicality and utility of the apparatus of the present invention.

With specific reference to Fig. 3, it will be observed that electrical communication is provided between outlet 48 and thermocouple 54 via two thin electrical wires or lead means which fit within the annular passageways created within probe 10. These electrical wires, identified as 56 and 58 in Figs. 4 and 5 are sheathed to provide electrical insulation in conventional fashion and even may be sheathed for providing a degree of thermal insulation. Disposed within support rod 46 are ceramic insulating spacers 60 which have a passageway therethrough for accommodating leads 56 and 58 and which passageway is in communication with the passageway in handle 42. Ceramic insulators 60 protect the wires from the extreme temperatures encountered by the probe during conventional brazing operations, while support rod 46 protects the ceramic insulators from the damage due to probable rough treatment which the probe may encounter during everyday usage. The ability to utilize probe 10 for retaining an implement in place for its brazing to a workpiece comes from support rod 46 additionally. It will be observed that support rod 46 penetrates into handle 42 a short distance for joining the probe elements together.

As noted above, a preferred use for the monitoring apparatus of the present invention involves the brazing of composite compact implements to workpieces as typified by drill bits. The implement is comprised of a polycrystalline composite compact, a stud or substrate, and a thin continuous layer of filler metal disposed therebetween. The composite compact, in turn, is comprised of a polycrystalline particulate mass or layer of bonded abrasive particles and a support or base layer preferably of cemented carbide bonded to the compact. Further details on such implements including their fabrication can be found in U.S. Pats. Nos. 4,225,322; 4,319,707; 4,527,998; and application Serial No. 752,419. As noted above, thermal damage to polycrystalline diamond can commence occurring at about 700°C or thereabouts. Thus, the temperature of the polycrystalline diamond mass during the brazing operations should be kept below such temperature unless a heat-sink modification to lessen the polycrystalline diamond mass temperature is employed. Practically speaking, such heat-sink modifications are impractical in daily operation so that the brazing operation of the carbide stud to the drill bit or other workpiece should be conducted so that the temperature of the polycrystalline diamond mass does not exceed the threshold temperature whereat loss of its properties can occur. The monitoring apparatus of the present invention finds its prime use under such circumstances.

As noted above also, the probe is constructed with sufficient reliability and durability so that it can apply tactile force through the composite compact implement for holding the implement in place in the drill bit or other workpiece during the brazing operation. Thus, the brazer need only hold the probe in one hand while holding the welding torch or other heating device in the other hand for accomplishing the brazing operation. Further, the brazer need not continuously look up from the operation in order to visually read the temperature of the workpiece via a dial or other readout device which occasionally is practiced today. The audible alarms provide the temperature monitoring required by the brazer for efficacious attachment of the implement to the drill bit or other workpiece. Such method comprises another aspect of the present invention as will be readily apparent to those skilled in the art. All references cited herein are incorporated expressly herein by reference.

**Claims**

1. Apparatus for monitoring the temperature of an implement being brazed to a workpiece, which comprises:

(a) a temperature probe comprising a stiff support rod of predetermined length with extent extending from a base portion to a tip; thermal insualtion means disposed within said support rod substantially along said lengthwise extent and having a first passageway therethrough; an insulating handle connected in supporting relationship with said rod and having a second passageway therethrough communicating with said first passageway; a heat shield disposed about said handle in the vicinity of its connection with said base portion of said rod; electrical connector means disposed at the end of said handle opposite said base portion; thermocouple means for generating signals correlative with temperature disposed at said rod tip; and lead means within said first and second passageways electrically coupling said electrical connector with said thermocouple means; and

(b) an alarm unit energizable from a source to have an enabled state and electrically coupled with said temperature probe; said unit having cuing means energized to provide a first perceptible output in the presence of said enabled state; a second perceptible output in the absence of the electrical coupling of said probe to said unit; circuit means responsive to said signals from said thermocouple and having first and second outputs corresponding with said signals representing two predetermined temperatures; first audible alarm means responsive to said first output; and second audible alarm means responsive to said second output, said two alarm means being audibly distinguishable.

2. The apparatus of claim 1 wherein said stiff support rod comprises stainless steel.

3. The apparatus of claim 1 wherein said insulation means comprises ceramic insulation.

4. The apparatus of claim 1 wherein said handle comprises wood.

5. The apparatus of claim 4 wherein said support rod comprises stainless steel and said insulation means comprises ceramic insulation.

6. The apparatus of claim 1 wherein said first audible alarm means comprises a continuous audible tone.

7. The apparatus of claim 1 wherein said second audible alarm means comprises an audible interrupted tone.

8. The apparatus of claim 1 wherein said first and second perceptible outputs are selected from the group consisting of an audible output, a visible output, or both of said outputs.

9. The apparatus of claim 8 wherein said first perceptible output comprises a visible light source and said second perceptible output comprises audible alarm means.

10. Method for monitoring the temperature of an implement comprising a composite compact having an abrasive particle layer bonded to a support which implement is being brazed to a substrate by a brazing filler metal disposed therebetween, which comprises:

(a) contacting a thermocouple of a temperature probe with said abrasive particle layer while applying heat for liquefying said brazing filler metal, said temperature probe comprising a stiff support rod of predetermined length with extent extending from a base portion to a tip; thermal insulation means disposed within said support rod substantially along said lengthwise extent and having a first passageway therethrough; an insulating handle connected in supporting relationship with said rod and having a second passageway therethrough communicating with said first passageway; a heat shield disposed about said handle in the vicinity of its connection with said base portion of said rod; electrical connector means disposed at the end of said handle opposite said base portion; thermocouple means for generating signals correlative with temperature disposed at said rod tip; and lead means within said first and second passageways electrically coupling said electrical connector with said thermocouple means;

(b) providing an alrm unit energizable from a source to have an enable state and electrically coupled with said temperature probe; said unit having cuing means energized to provide a first perceptible output in the presence of said enabled state; a second perceptible output in the absence of the electrical coupling of said probe to said unit; circuit means responsive to said signals from said thermocouple and having first and second outputs corresponding with said signals representing two predetermined temperatures; first audible alarm means responsive to said first output; and second audible alarm means responsive to said second output, said two alarm means being audibly distinguishable;

(c) monitoring said alarm unit while applying said heat so that brazing proceeds during actuation of said first audible alarm means, provided that said heating is discontinued upon the occurrence of said second audible alarm means which is indicative of a threshold temperature maximum tolerated by said abrasive particle layer; and

(d) discontinuing said heating upon the completion of said brazing.

11. The method of claim 10 wherein said support and said substrate are cemented carbides.

12. The method of claim 11 wherein both said support and said substrate are metal bonded carbide selected from the group consisting of tungsten carbide, titanium carbide, tungsten molybdenum carbide, and tantalum carbide, wherein the metal providing the metal bond is selected from the group consisting of cobalt, nickel, iron, and mixtures thereof.

13. The method of claim 12 wherein both said support and said substrate are cobalt-cemented tungsten carbide.

14. The method of claim 10 wherein said abrasive particle layer comprises a self-bonded polycrystalline diamond compact having an infiltrated metal second phase.

15. The method of claim 14 wherein said second phase comprises cobalt.

16. The method of claim 10 wherein said first audible alarm means corresponds to a temperature sensed by said thermocouple which is adequate for said brazing filler metal to braze said implement to said substrate.

17. The method of claim 10 wherein said support rod comprises stainless steel, said insulation means comprises ceramic insulation, and said handle comprises wood.

18. The method of claim 10 wherein said first audible alarm means comprises a continuous audible tone.

19. The method of claim 10 wherein said second audible alarm means comprises an audible interrupted tone.

20. The method of claim 10 wherein said first perceptible output comprises a visible light source which is monitored also.

21. The method of claim 10 wherein a flux is used as a heat transfer medium between said thermocouple and said abrasive particle layer.

22. The method of claim 21 wherein said flux is selected from the group consisting of boric oxide, anhydrous boric oxide, chlorides of alkali metals, fluorides of alkali metals, and mixtures thereof.

23. The method of claim 22 wherein said flux comprises boric oxide.

_FIG. 1_

_FIG. 2_

605Ω-294

FIG. 3

10

FIG. 5

FIG. 4